# EUROPEAN PATENT APPLICATION

(11) **EP 3 895 922 A1**
(43) Date of publication of application: **20.10.2021**
(21) Application number: 20169752.1
(22) Date of filing: 16.04.2020
(51) Int. Cl.: B60H 1/34, F24F 13/14

(54) **AIR DISTRIBUTION AIR VENT FOR VEHICLE DASHBOARD**

(71) Applicant: PSA Automobiles SA, 78300 Poissy (FR); Dr. Schneider Kunststoffwerke GmbH, 96317 Kronach-Neuses (DE)
(72) Inventor: DUTOT, CHRISTOPHE, 94400 VITRY SUR SEINE (FR); DESNOEL, ALEXIS, 78450 VILLEPREUX (FR); VANNESTE, PASCAL, 78140 VELIZY VILLACOUBLAY (FR); KERVAREC, FLORIAN, 91310 LONGPONT SUR ORGE (FR); BARRE, PHILIPPE, 94340 JOINVILLE LE PONT (FR); KREUTZER, Danny, 96524 Föritz (DE); SHAIK, Shabbeer, 95448 Bayreuth (DE)

(57) **Abstract**

An air distribution air vent (1) comprising a housing (3) defining an inlet opening (5) and an outlet opening (7), wherein the housing (3) defines an air path extending between the inlet opening (5) and the outlet opening (7), one or more blades (15, 17) being pivotably mounted to an axis of rotation (A), one or more fins (19) each being pivotably mounted to one or more axes of rotation (B), one or more closure flaps (13) pivotably mounted to an axis of rotation (C), a common actuating mechanism configured for pivoting said one or more blades (15, 17), said one or more fins (19) and said one or more closure flaps (13) about their respective axis of rotation, wherein said common actuating mechanism comprises a single actuator accessible from the outside of said housing (3), and is configured to transmit a rotational movement of the actuator on itself to the axis of rotation of at least one closure flap (13) and comprises, in this respect, a crank that is rotatably connected to said actuator.

## Description

### Field of the Invention

The invention relates to an air distribution air vent, such as air distribution air vent used in automotive vehicle dashboards, for the circulation of air from the heating, ventilation and air conditioning (HVAC) system in the passenger compartment of the vehicle.

### Background of the invention

Many automotive vehicles comprise an air distribution air vent that allows a vehicle occupant to control the temperature or other parameters. For instance, the vehicle occupant may need to adjust the direction of the airflow exiting the air vents and/or to regulate its flow.

The known air vents may, therefore, have several adjusting devices to adjust the airflow output direction along a first direction, for example horizontal, involving a first set of deflector members and a second output direction, for example vertical, involving a second set of deflector members. A third adjusting device can be provided to adjust the flow of the airflow output involving one or more closure flaps.

The air vents are generally open on the dashboard and affect the aesthetic of the design of said dashboard and therefore the perceived quality of the vehicle. The same considerations apply to the use of several actuators, each being dedicated to one of the above-listed functions of the air vent or to the positioning of the said actuator on the air vent itself such as on visible deflector members.

It is known from prior art, such as from EP1712384, an air distribution air vent for vehicle dashboard including a valvular device for the opening and the closing of the airflow duct; a first device for adjusting the output direction of the airflow according to a first direction; a second device for adjusting the output direction of the airflow according to a second direction; and a single controlling knob moveable in a linear direction to control the opening and the closing of the valvular device, angularly rotatable to control the first adjusting device and further movable along said linear direction to control the second adjusting device. The solution presented in this document is interesting but has the disadvantage that two of the devices are actuated by the same movement of the controlling knob and therefore sequentially. As a consequence, the settings of the user regarding the direction of the airflow cannot be kept when closing and reopening the valvular device. Moreover, for the aesthetics point of view, it would be preferable to not have the controlling knob placed on visible and movable deflectors members.

In a similar way, the document DE102015101116 relates to a device for controlling airflow from an air vent. The device has a first operating element which is arranged rotatably on a pivotably mounted control plate so that by controlling the first operating element, control of the quantity of the outflowing air can be carried out by a closing device. At least one second operating element decoupled from the first operating element is displaceably mounted thereon along with the control plate in order to allow the control of the airflow according to a direction orthogonal to the direction of the control plate. The solution is interesting but shows several drawbacks such as the need for several operating elements and the fact that these operating elements are placed inside the air path.

The document DE102014105359 discloses an air vent with a control element that has an operating section and a control section. The operating element between the operating section and the control section is pivotally mounted in a receptacle on the housing and a spherical element slidable along the control section, which is mounted between two control elements, each having an oblong opening, which runs at a right angle to each other. The control elements are displaceably mounted in a control receptacle, wherein a first control element is connected with the fins running in a first direction and a second control element is connected with the fins running in a second direction. This solution is interesting but requires another operating element to regulate the airflow. In addition, it is preferable to avoid the use of multiple visible flaps for aesthetic reasons.

US9937774 describes an air vent including a housing extending between an inlet opening and an outlet opening, such that the housing defines a substantially closed air path between the inlet opening and the outlet opening. A first vane is placed within the air path and is configured to rotate about a first axis. A second vane is placed within the air path and is configured to rotate about a second axis, which is substantially orthogonal to the first axis. A controller is configured to rotate the first vane about the first axis and to rotate the second vane about the second axis. The controller is placed outside of the air path so that both the first vane and the second vane are adjustable from outside of the air path. This solution is interesting in particular in that it allows the air vent to be thin and therefore to look better. It implements the physical phenomenon known as the "Coanda effect" according to which a flow is guided by staying attached to a convex surface, has a low-pressure drop and thus may generate little noise.

However, it shows some drawbacks. Indeed, with this type of aerator, the outlet airflow section varies considerably depending on the position of the fin located upstream from the guiding core. This section is thus twice as small when this fin occupies its extreme low or high positions than when it occupies its intermediate position. This results in a much higher airspeed at the outlet of the aerator generating the turbulence, losses of charge and much higher operating noise (gain of about 7 to 8 dB). In addition, the possibility to block airflow through the air path is provided by further rotation of the second vane, so that the settings of the user regarding the direction of the airflow cannot be kept when closing and reopening the airflow.

As all these documents fail to provide a satisfactory response to the problems encountered by the person skilled in the art. The invention aims to improve the situation. In particular, the invention aims to provide an aesthetic and silent air distribution air vent wherein the adjustment of the direction of the exiting airflow in any direction can be made independently of the adjustment of the flow but with a single actuator.

### Summary of the invention

According to a first aspect, the invention provides an air distribution air vent, with the air vent comprising:
- a housing defining an inlet opening and an outlet opening, wherein the housing defines an air path extending between the inlet opening and the outlet opening;
- one or more blades being pivotably mounted to an axis of rotation extending according to a first direction;
- one or more fins each being pivotably mounted to one or more axis of rotation extending according to a second direction which is orthogonal to the first direction;
- one or more closure flaps pivotably mounted to an axis of rotation;
- a common actuating mechanism configured for pivoting the said one or more blades and the said one or more fins about their respective axis of rotation, wherein the said common actuating mechanism comprises a single actuator accessible from the outside of the said housing;
the air vent is remarkable in that the common actuating mechanism is further configured for pivoting the one or more closure flaps about their axis of rotation by transmitting a rotational movement of the actuator on itself to the axis of rotation of at least one closure flap and in that the common actuating mechanism comprises, in this respect, a crank that is rotatably connected to the said actuator.

From the definition given, it is understood that the invention provides an air vent which is easy to handle by the user who is able to control independently from each other the direction of the airflow, and the opening and the closing of the closure flaps, wherein the air vent comprises a single actuator that is disposed outside the housing and therefore outside the air path. As the control of the airflow direction can be done independently to the control of the flow, the settings of the user regarding the direction of the airflow exiting the air vent are not changed or lost when closing the closure flaps. As it will be seen, the use of a crank is advantageous as it allows absorbing the other movements of the actuator that are used to pivot the one or more blades and the one or more fins.

In an embodiment, the one or more closure flaps are placed upstream from the one or more fins and from the two blades, wherein the one or more closure flaps are pivotably mounted to an axis of rotation that is extending according to the first direction or to the second direction.

In an embodiment, the said common actuating mechanism comprises a support element and the said actuator comprises a rod fixed by a ball joint to the said support element wherein the ball joint allows a movement of inclination of the rod relative to the said support element and a rotation movement of the rod around its axis.

In an embodiment, the said common actuating mechanism comprises a support element and one or more guiding elements mounted on the said support element, wherein the crank is arranged interposed between the support element and the one or more guiding elements.

Optionally, the said common actuating mechanism comprises a support element and said actuator comprises a rod fixed by a ball joint to said support element so as to define an inner portion and an outer portion of the rod, wherein the outer portion of the rod comprises a gripping member intended to be manipulated by the user.

In an embodiment, the actuator comprises a rod and the crank is rotatably connected to the said rod, wherein the common actuating mechanism comprises a drive shaft configured to form a sliding pivot connection with the crank; with preference, the common actuating mechanism further comprises a transmission shaft, said transmission shaft being linked by one of its ends to the drive shaft by means of a ball joint, and by its other end to the axis of rotation of at least one closure flap; and/or the common actuating mechanism comprises a support element and is configured to have the drive shaft in a pivot connection with the support element.

In an embodiment, the air distribution air vent comprises two blades that are arranged one downstream from the other so as to define a first blade and a second blade, said two blades being connected and articulated to each other by pivoting about a common axis of rotation. Said configuration makes it possible to give a better aerodynamic performance in terms of the airspeed at the outlet of the air vent and to reduce the noise emitted by said air vent.

Preferably, the air distribution air vent comprises two blades, and the air vent is remarkable in that each of the first and the second blade comprises one actuating lug extending in a direction parallel to the first direction and placed spaced from the common axis of rotation so as to define a first lug and a second lug; the said first and second lugs being arranged to be aligned along a third direction that is non-parallel to the first and the second direction, and in that the common actuating mechanism includes a first guiding element cooperating with the first and second lugs for moving the blades in rotation around their common axis of rotation, wherein the first guiding element is mounted to be movable in translation in a direction parallel to the second direction.

In an embodiment, the housing comprising at least one sidewall, the air vent is remarkable in that the two blades defines two opposite air-guiding surfaces delimiting with said housing an upper flow channel and a lower flow channel able to respectively convey to said outlet opening a first and a second quantity of air from said inlet opening, wherein the said second blade is displaceable between an extreme low position in which said lower flow channel is closed so that all of the said airflow flows in said upper flow channel, and a second extreme high position where said upper flow channel is closed so that all of the said airflow flows in said lower flow channel.

In an embodiment, the air vent is remarkable in that the first guiding element comprises a side arm extending in the third direction, wherein the actuating lugs are mounted free to rotate and to slide according to the said third direction in one or more openings formed within the said side arm. Preferably, both actuating lugs are placed outside the housing.

In an embodiment, the said common mechanism further includes a second guiding element mounted to be moved in translation in a direction parallel to the first direction and intended to move said one or more fins in rotation about their axis of rotation.

In an embodiment, the said common mechanism further includes a first and a second guiding element and a support element, wherein the first and second guiding elements are mounted on said support element with a slide connection to said support element.

In an embodiment, the second guiding element is connected to the axis of rotation of the fin or of at least one of the fins by means of a connecting rod arranged to transform a translational movement into a rotational movement.

In an embodiment, the air vent comprises a plurality of fins, wherein the said fins are arranged parallel to each other and being secured in rotation by means of a connecting member connecting them to each other.

In an embodiment, the actuator comprises a rod and a first and second guiding element, wherein the first guiding element and/or the second guiding element shows an elongate opening that is traversed by the said rod; with preference, the elongate opening of the first guiding element is extending in the first direction and/or the elongate opening of the second guiding element is extending in the second direction.

According to a second aspect, the invention provides an automotive vehicle remarkable in that it comprises at least one air distribution air vent according to the first aspect.

### Brief Description of the Drawings

Other aspects and advantages of the invention will be clearer after reading the following detailed description taken in conjunction with the drawings provided, in which
Figure 1 is a simplified view in vertical longitudinal section of the air vent according to the invention in which the first and second blades occupy their intermediate position.
Figure 2 is a semi-exploded view of the different elements comprised in an embodiment of the air distribution air vent according to the invention wherein the housing is partially represented only.
Figure 3 is a side view of the air vent according to the invention wherein the first and second blades are visible through the housing and occupy their extreme high position.
Figure 4 is a side view of the air vent according to the invention wherein the first and second blades are visible through the housing and occupy their extreme low position.
Figure 5 is a partial view of the common actuating mechanism.

### Detailed description

In the following description, the term "comprise" is synonymous with "include" and is not limiting in that it allows the presence of other elements in the vehicle or in the air vent. It is understood that the term "comprise" includes the wording "consist of". Similarly, the terms "inferior", "superior", "lower", "higher" and "upper" will be understood in relation to the general orientation of the vehicle or of the air distribution air vent when mounted on the vehicle. Thus, "lower" will mean greater ground proximity than "higher" or "upper" along the vertical axis. In the different figures, the same references designate identical or similar elements. The wording "air distribution air vent" and "air vent" are used as synonyms.

An orthogonal reference mark XYZ is defined in the figures as comprising three axes perpendicular two by two, namely: an X-axis defining a longitudinal, horizontal direction parallel to the longitudinal axis of the vehicle; a Y-axis, defining a transverse, horizontal direction which, with the X-axis, defines a horizontal XY plane; and a Z-axis, defining a vertical direction perpendicular to the horizontal XY plane.

The invention relates to an air distribution air vent intended to be installed on the dashboard (not shown) of a vehicle to diffuse in the passenger compartment of the vehicle pulsed air from a ventilation system and/or air conditioning system.

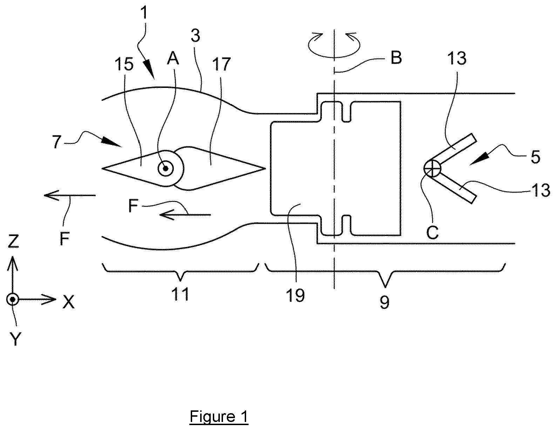

Figure 1 is a simplified view in vertical longitudinal section of the air distribution air vent 1 according to the invention, the air vent 1 may be part of a heating, ventilation, and air conditioning (HVAC) system. The air vent 1 comprises a housing 3 that extends longitudinally and defines an inlet opening 5 and an outlet opening 7.

The housing 3 can be made of two parts, such as an upper plate and a lower plate. The housing 3 comprises sidewalls that can be integral with the upper plate and/or with the lower plate. The housing is constituted successively, from the inlet opening 5 to the outlet opening 7, by a first section 9 having one or more constant rectangular section of the same or different size and a second section 11 having a symmetrical biconvex longitudinal profile or an oval profile. This second section 11 may consist of an upstream portion having a vertical longitudinal section widening in the direction of flow of the airflow F, and a downstream portion having a vertical longitudinal section narrowing in the same direction of circulation of airflow F.

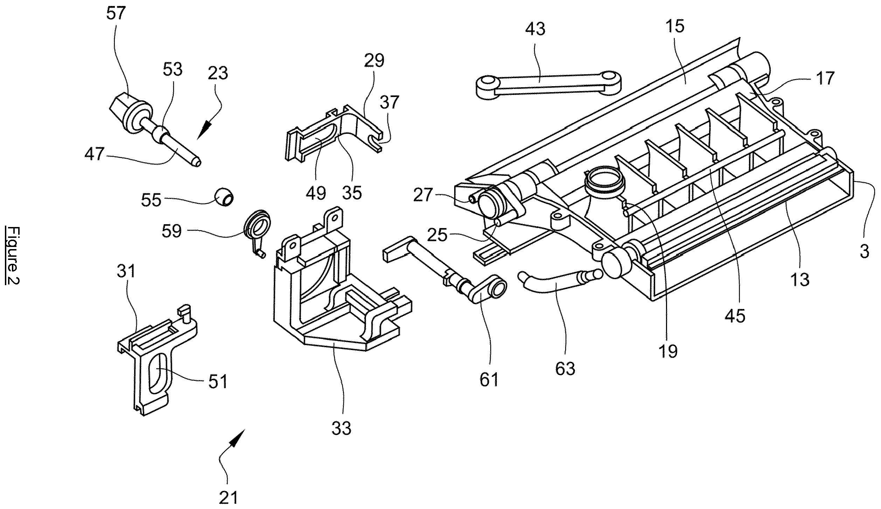

Also referring to figure 2, and with continued reference to figure 1, there is shown a semi-exploded view of the air vent 1 wherein the upper plate of the housing 3 has been omitted for clarity purposes. In the example of configuration shown, both the inlet opening 5 and the outlet opening 7 are transversally oriented, such that the air vent 1 has a low or thin profile but is capable of transferring a substantial volume of air. The person skilled in the art can nevertheless adapt the invention to another shape or geometry of the air vent or to another orientation, such as a vertical orientation of the inlet and the outlet opening. The outlet opening may comprise a faceplate (not shown) that is generally flush with the surrounding structure, for example, the dashboard. The air vent is preferably mounted in the dashboard of the vehicle but can be located in other areas of the vehicle. For example, it can be mounted in the centre console positioned between the driver-side seat and the passenger-side seat, in one of the front or rear passenger seat; with the ceiling or the floor; within one or more pillars. It also may be incorporated in applications other than vehicles such as into HVAC systems of buildings or mobile housing.

The housing 3 defines an air path between the inlet opening 5 and the outlet opening 7. In an embodiment, the air path may be closed by means of one or more closure flaps 13. The air vent 1 directs airflow from the air path into the vehicle along a selectable direction referred as an exit F in the figures 1, 3 and 4.

In following description, the terms "upstream" and "downstream" used to characterize the position of certain elements of the air distribution air vent 1 are to be considered with respect to the direction of flow of the airflow F in the housing 3 as visible in figure 1.

The air vent 1 comprises one or more blades (15, 17) being pivotably mounted to an axis of rotation (A) extending according to a first direction. In the configuration shown the air vent 1 comprises two blades (15, 17), each being pivotably mounted to an axis of rotation A extending according to a first direction; and one or more fins 19, each being pivotably mounted to an axis of rotation B extending according to a second direction which is orthogonal to the first direction.

As it will be seen in details, the air vent 1 further comprises a common actuating mechanism 21 configured for pivoting the said one or more blades (15,17) and the said one or more fins 19 about their respective axis, wherein the said common actuating mechanism 21 comprises a single actuator 23 accessible from the outside of the said housing 3. According to the invention, the common actuating mechanism 21 is further configured for pivoting the one or more closure flaps 13 about their axis of rotation. In this respect, the common actuating mechanism 21 is configured to control the pivoting of the said one or more blades (15,17) and the said one or more fins 19 about their respective axis by a given movement of the said actuator 23 which is selected from a sliding of the said actuator 23 on a plane defined by the first and the second direction, or by the inclination of the said actuator 23 according to a plane defined by the first and the second direction; and is configured to control the pivoting of the said closure flaps 13 around their axis by a movement of rotation of the said actuator 23 on itself. As the actuator is moved in a different manner when adjusting the direction of the airflow and the flow, the said adjustments can be done one independently of the other so that the setting of the user regarding the direction of the airflow is not lost when closing or reopening the closure flaps 13.

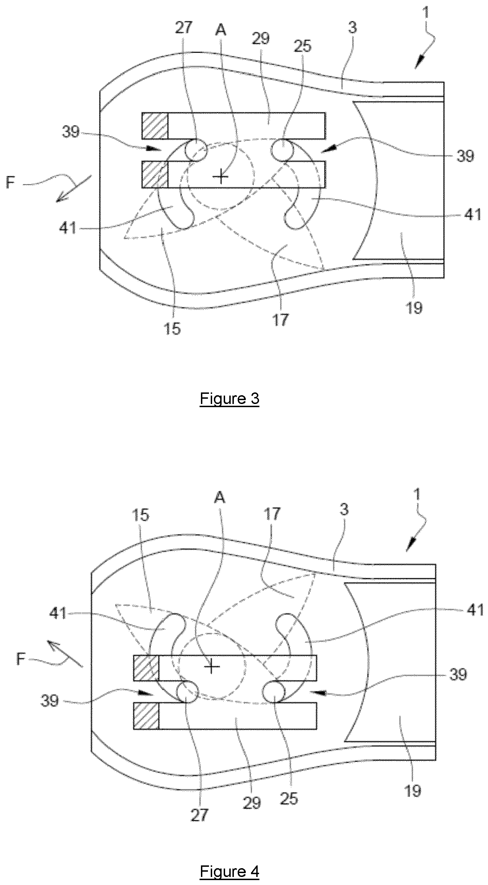

With reference to figures 3 and 4, the two blades (15, 17) are arranged one downstream from the other so as to define a first blade 15 and a second blade 17, wherein said blades (15, 17) are connected and articulated to each other by pivoting about a common axis of rotation A. The common axis of rotation A is preferably arranged in the median horizontal plane of the housing 3, such as at equidistance of the upper and lower walls of the second section 11 of the housing. Each blade (15, 17) may have a symmetrical biconvex longitudinal profile with a free tip end. The two blades (15, 17) define two opposite air-guiding surfaces the opposite each other delimiting with said housing an upper flow channel and a lower flow channel able to respectively convey to said outlet opening 7 a first and a second quantity of air from said inlet opening 5. The second blade 17 is pivotable between an extreme low position in which the lower flow channel is closed (configuration of figure 3) so that the entire said flow of air flows in the said upper flow channel, and an extreme high position in which the upper flow channel is closed (configuration of figure 4) so that all of said airflow F flows in the said lower flow channel. Thus, by varying its inclination, it is possible to adjust the ratio between the first and second amount of air and thus the exit direction of the airflow F relative to the horizontal.

In order to be pivoted around their common axis of rotation, each of the first and the second blade (15, 17) comprises one actuating lug (25, 27). The actuating lugs (25, 27) are extending in a direction parallel to the first direction and placed spaced from the common axis of rotation A so as to define a first lug 25 and a second lug 27. In an embodiment, at least one of the actuating lugs (25, 27), and with preference, the actuating lugs (25, 27) and the free tip end of their associated blades (15, 17) are arranged to be diametrically opposed, compared to the common axis of rotation A.

The said first and second lugs (25, 27) are connected to the first guiding element 29 in order to be aligned along a third direction that is non-parallel to the first and the second direction; with preference, the said first and second lugs (25, 27) are aligned along a direction orthogonal to the first and the second axis of rotation. When the air vent 1 is mounted in the dashboard the said first direction may be parallel to the transverse horizontal direction (axis Y), the said second direction may be parallel to the vertical direction (axis Z), and the said third direction may be parallel to the longitudinal, horizontal direction (axis X).

According to the invention, the blades (15, 17) and the one or more fins 19 are actuated by a common actuating mechanism 21 which includes a first guiding element 29 cooperating with the first and second lugs (25, 27) for moving the blades (15, 17) in rotation around their common axis of rotation A, wherein the first guiding element 29 is mounted to be movable in translation in a direction parallel to the second direction; and a second guiding element 31 mounted to move in translation in a direction parallel to the first direction and intended to move said one or more fins in rotation about their axis of rotation B. In the configuration where the air vent 1 comprises one or more closure flaps 13, the said closure flaps 13 are actuated by the said common actuating mechanism 21, as it will be described later.

In an embodiment, the common actuating mechanism 21 further includes a support element 33, and the first and second guiding elements (29, 31) are mounted on said support element 33, with a slide connection to said support element 33.

The first guiding element 29 is preferably an L-shaped or a T-shaped element with a front arm 35 that is connected to the support element 33, and a side arm 37. The front arm 35 is extending in the first direction (axis Y) whereas the side arm 37 is extending in the third direction (axis X).

In an embodiment, at least one of the actuating lugs (25, 27) is extending from the side of its respective blade (15,17). Preferably, both actuating lugs (25, 27) are extending from the side of the blades (15,17). In such a case, as illustrated in figure 3 and 4, each of the actuating lugs (25, 27) passes through a circular arc opening 41 formed in a sidewall of said housing 3. With preference the said openings 41 are placed on either side of the common axis of rotation A.

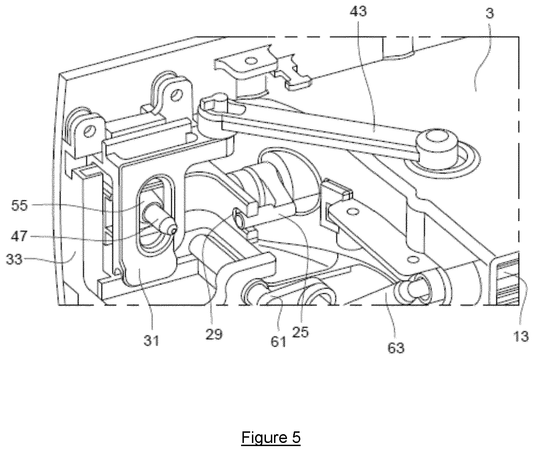

In another embodiment, at least one actuating lug (25, 27) is placed outside the housing 3. Preferably, both actuating lugs (25, 27) are placed outside the housing 3. In such a case, as illustrated in figure 5, each of the actuating lugs (25, 27) is fixed in rotation with the axis of rotation of its associated blade (15, 17) and placed spaced from the said axis by means of an arm of a defined length. Both the arm and its associated lug (25, 27) are placed outside the housing 3; preferably, the arms are integral with their associated actuating lug (25, 27).

Whether the actuating lugs (25, 27) are placed outside the housing or not, their operation remains the same, the actuating lugs (25, 27) are mounted free to rotate and to slide according to the said third direction in openings 39 formed within the side arm 37. The sliding of the first guiding element 29 in a direction parallel to the second direction will, therefore, cause the synchronized pivoting of the two blades (15, 17). This makes it possible to adjust the dimensions of the two upper and lower flow channels as a function of the angular position of the second blade 17. The speed of the air leaving the air vent 1, therefore, varies little regardless of the vertical orientation of the airflow dictated by the position of the second blade 17, which ensures a substantially uniform and discrete operating noise.

It is understood that the first and the second blade are preferably arranged to rotate in opposite directions. In an embodiment, the spacing between the first lug 25 of the first blade 15 and the common axis of rotation A is greater than that between the second lug 27 of the second blade 17 and the same common axis of rotation A, so that the first blade 15 has a rotation speed inferior to that of the second blade 17 (i.e. a smaller angular displacement) during the sliding of the first guiding 29.

The second guiding element 31 is connected to the axis of rotation of the fin 19 or of at least one of the fins 19 by means of a connecting rod 43 arranged to transform a translational movement into a rotational movement. The translational or sliding movement is made parallel to the first direction (axis X). In the configuration shown, the air vent 1 comprises a plurality of fins 19, said fins 19 being arranged parallel to each other and being secured in rotation by means of a connecting member 45 connecting them to each other. The rotation about their axis of rotation B of the one or more fins makes possible to adjust the direction of exit of the airflow F with respect to the median plane parallel to the second direction of the housing 3.

Both the first and the second guiding elements (29, 31) are configured to be moved by the said actuator 23 which forms part of the common actuating mechanism 21. The actuator comprises a rod 47, and the first guiding element 29 and/or the second guiding element 31 shows an elongate opening (49, 51) that is traversed by the rod 47 of the actuator 23. Preferably, both the first and the second guiding element (29, 31) comprise an elongate opening (49, 51) traversed by the rod 47 of the actuator 23, wherein the elongate opening 49 of the first guiding element 29 is extending in the first direction (axis Y) and the elongate opening 51 of the second guiding element 31 is extending in the second direction (axis Z), thus in a direction orthogonal to the first direction. Wherein the first guiding element 29 comprises a front arm 35 and a side arm 37, and the elongated opening 49 for cooperation with the rod 47 of the actuator is formed on the front arm 35.

The rod 47, thereby, crosses the elongated opening of each guiding element and is placed in support against the elongated edge to slide the said guiding elements in a direction orthogonal to the direction of its elongated opening. With preference, the rod 47 of the actuator 23 carries a spherical element 53 arranged interposed between the two guiding elements (29, 31) to facilitate the slippage of those guiding elements in relation to each other by decreasing the friction forces. In an alternate or complementary manner, the two guiding elements (29, 31) are in contact with each other at one of their faces, and at least one of the guiding elements (29, 31) shows a Teflon coating on its face in contact with the other guiding element (29, 31).

As the said common actuating mechanism 21 comprises a support element 33 and said actuator 23 comprises a rod 47, the said actuator is preferably fixed by a ball joint 55 to said support element 33 so as to define an inner portion and an outer portion of the rod 47. The inner portion is the one that cooperates with the first and the second guiding elements (29, 31), the outer portion bears a gripping member 57 intended to be manipulated by the user. Should the common actuating mechanism be devoid of the said support element, the actuator may be fixed by a ball joint to the facade element of the dashboard.

According to the invention, the air vent 1 further comprises one or more closure flaps 13 placed upstream from the one or more fins 19 and of the two blades (15, 17); with preference, the one or more closure flaps 13 are pivotably mounted to an axis of rotation C that is extending according to the first direction or to the second direction.

The ball joint 55 used according to the invention allows the gripping member 57 to rotate on itself, i.e. about the axis of the rod 47. This further movement of the actuator 23 is used to control closure flaps 13. Thus, the said common actuating mechanism 21 is configured to allow the user to command the closing and opening of the said closure flaps 13; with preference the common actuating mechanism 21 is configured for pivoting the one or more closure flaps 13 about their axis of rotation, independent of the pivoting the said blades (15, 17) and the said one or more fins 19 about their respective axis.

In this respect, the common actuating mechanism 21 further comprises a crank 59 rotatably connected to the actuator 23, and preferably to the rod 47 of the actuator 23, so as to transmit the movement of rotation which is applied by the user, or by an electric motor (not shown), to the actuator 23 to the axis of rotation C of at least one closure flap 13 through a set of transmission elements (61; 63). In an embodiment, the set of transmission elements (61, 63) comprises a drive shaft 61 configured to form a sliding pivot connection with the crank 59. The drive shaft 61 is arranged to form a pivot connection with the support element 33, and a ball joint with a transmission shaft 63. The said transmission shaft 63 is linked to the axis of rotation of at least one closure flap 13.

The air vent may comprise a plurality of closure flaps, wherein the said closure flaps are arranged parallel to each other and are secured in rotation by means of a connecting member connecting them to each other, or it may comprise two closure flaps configured to rotate about a common axis of rotation in opposite direction, or it may comprise a single closure flap.

Because the common actuating mechanism 21 is configured to control the closure flaps 13 with a movement that is different from the one used to control the direction of the airflow exiting the air vent 1, the settings of the user regarding the direction of the said airflow can be kept when closing and reopening the closure flaps 13.

According to yet another embodiment not shown, the common actuating mechanism may comprise an electric motor capable of driving the movements of the actuator's rod.

### List of references

- 1 -: air distribution air vent
- 3 -: housing
- 5 -: inlet opening
- 7 -: outlet opening
- 9 -: first section of the housing
- 11 -: second section of the housing
- 13 -: closure flaps
- 15 -: first blade
- 17 -: second blade
- 19 -: fins
- 21 -: common actuating mechanism
- 23 -: actuator
- 25 -: first actuating lug
- 27 -: second actuating lug
- 29 -: first guide member
- 31 -: second guide member
- 33 -: support member
- 35 -: front arm
- 37 -: side arm
- 39 -: opening of the side arm
- 41 -: circular arc opening formed in the sidewall of the housing
- 43 -: connecting rod
- 45 -: connecting member
- 47 -: actuator's rod
- 49 -: opening of the first guide member
- 51 -: opening of the second guide member
- 53 -: spherical element
- 55 -: joint ball
- 57 -: gripping member
- 59 -: crank
- 61 -: drive shaft
- 63 -: transmission shaft

## Claims

1. An air distribution air vent (1), with the air vent comprising:
- a housing (3) defining an inlet opening (5) and an outlet opening (7), wherein the housing (3) defines an air path extending between the inlet opening (5) and the outlet opening (7);
- one or more blades (15, 17) being pivotably mounted to an axis of rotation (A) extending according to a first direction;
- one or more fins (19) each being pivotably mounted to one or more axis of rotation (B) extending according to a second direction which is orthogonal to the first direction;
- one or more closure flaps (13) pivotably mounted to an axis of rotation (C);
- a common actuating mechanism (21) configured for pivoting the said one or more blades (15, 17) and the said one or more fins (19) about their respective axis of rotation, wherein the said common actuating mechanism (21) comprises a single actuator (23) accessible from the outside of the said housing (3);
the air vent (1) is **characterized in that** the common actuating mechanism (21) is further configured for pivoting the one or more closure flaps (13) about their axis of rotation by transmitting a rotational movement of the actuator on itself to the axis of rotation (C) of at least one closure flap (13) and **in that** the common actuating mechanism (21) comprises in this respect a crank (59) that is rotatably connected to the said actuator.

2. The air distribution air vent (1) according to claim 1, **characterized in that** the said common actuating mechanism (21) comprises a support element (33) and the said actuator (23) comprises a rod (47) fixed by a ball joint (55) to the said support element (33) wherein the ball joint (55) allows a movement of inclination of the rod (47) relative to the said support element (33) and a rotation movement of the rod (47) around its axis; and/or **in that** the said common actuating mechanism (21) comprises a support element (33) and one or more guiding elements (29, 31) mounted on the said support element (33), wherein the crank (59) is arranged interposed between the support element (33) and the one or more guiding elements (29, 31).

3. The air distribution air vent (1) according to claim 1 or 2, **characterized in that** the actuator (23) comprises a rod (47) and the crank (59) is rotatably connected to the said rod (47), wherein the common actuating mechanism (21) comprises a drive shaft (61) configured to form a sliding pivot connection with the crank (59); with preference, the common actuating mechanism (21) further comprises a transmission shaft (63), said transmission shaft (63) being linked by one of its ends to the drive shaft (61) by means of a ball joint, and by its other end to the axis of rotation of at least one closure flap (13); and/or the common actuating mechanism (21) comprises a support element (33) and is configured to have the drive shaft (61) in a pivot connection with the support element (33).

4. The air distribution air vent (1) according to claim 1 to 3, **characterized in that** it comprises two blades (15, 17) that are arranged one downstream from the other so as to define a first blade (15) and a second blade (17), said two blades (15, 17) being connected and articulated to each other by pivoting about a common axis of rotation (A), and/or **in that** the one or more closure flaps (13) are placed upstream from the one or more fins (19) and from the two blades (15, 17) wherein the one or more closure flaps (13) are pivotably mounted to an axis of rotation (C) that is extending according to the first direction or to the second direction.

5. The air distribution air vent (1) according to claim 4, wherein the air distribution air vent (1) comprises two blades (15, 17), **characterized in that** each of the first and the second blade (15, 17) comprises one actuating lug (25, 27) extending in a direction parallel to the first direction and placed spaced from the common axis of rotation (A) so as to define a first lug (25) and a second lug (27); the said first and second lugs (25, 27) being arranged to be aligned along a third direction that is non-parallel to the first and the second direction, and **in that** the common actuating mechanism (21) includes a first guiding element (29) cooperating with the first and second lugs (25, 27) for moving the blades (15, 17) in rotation around their common axis of rotation (A), wherein the first guiding element (29) is mounted to be movable in translation in a direction parallel to the second direction.

6. The air distribution air vent (1) according to claim 5, **characterized in that** the first guiding element (29) comprises a side arm (37) extending in the third direction, wherein the actuating lugs (25, 27) are mounted free to rotate and to slide according to the said third direction in one or more openings (39) formed within the said side arm (37); with preference, both actuating lugs (25, 27) are placed outside the housing (3).

7. The air distribution air vent (1) according to any one of claims 1 to 6, **characterized in that** the said common mechanism (21) further includes a second guiding element (31) mounted to be moved in translation in a direction parallel to the first direction and intended to move said one or more fins in rotation about their axis of rotation (B); and/or **in that** the said common mechanism (21) further includes a first and second guiding elements (29, 31) and a support element (33), wherein the first and second guiding elements (29, 31) are mounted on said support element (33) with a slide connection to said support element (33).

8. The air distribution air vent (1) according to claim 7, **characterized in that** the second guiding element (31) is connected to the axis of rotation of the fin (19) or of at least one of the fins (19) by means of a connecting rod (43) arranged to transform a translational movement into a rotational movement; and/or **in that** the air vent (1) comprises a plurality of fins (19), wherein the said fins (19) are arranged parallel to each other and are secured in rotation by means of a connecting member (45) connecting them to each other.

9. The air distribution air vent (1) according to claim 1 to 8, **characterized in that** the actuator (23) comprises a rod (47) and a first and second guiding elements (29, 31), wherein the first guiding element (29) and/or the second guiding element (31) shows an elongate opening (49, 51) that is traversed by the said rod (47); with preference, the elongate opening (49) of the first guiding element (29) is extending in the first direction and/or the elongate opening (51) of the second guiding element (31) is extending in the second direction.

10. An automotive vehicle **characterized in that** it comprises at least one air distribution air vent according to any one of claims 1 to 9.
